# EUROPEAN PATENT APPLICATION

(11) **EP 4 736 715 A1**
(43) Date of publication of application: **06.05.2026**
(21) Application number: 25208540.2
(22) Date of filing: 14.10.2025
(51) Int. Cl.: A47J 37/07, F23Q 7/02

(54) **CONTACTLESS IGNITION SYSTEM**

(30) Priority: 30.10.2024 US 202418932158
(71) Applicant: Traeger Pellet Grills, LLC, Salt Lake City, Utah 84101 (US)
(72) Inventor: Wiechec, Corry, Bountiful, UT, 84010 (US); Horton, Scott, Kalamazoo, MI, 49009 (US)
(74) Representative: Grünecker Patent- und Rechtsanwälte PartG mbB

(57) **Abstract**

A heating system that combusts solid fuel includes a firepot configured to hold the fuel to be combusted therein. The heating system also includes a contactless ignition system including a heating element configured to generate heat sufficient to combust the fuel within the firepot, and an element housing interfaced with the firepot. The element housing is configured to at least partially surround the heating element to prevent the heating element from contacting the fuel within the firepot.

## Description

### PRIORITY CLAIM

This application claims the benefit of the filing date of United States Patent Application Serial No. 18/932,158, filed October 30, 2024, for "CONTACTLESS IGNITION SYSTEM," the disclosure of which is hereby incorporated herein in its entirety by this reference.

### TECHNICAL FIELD

This disclosure relates generally to ignition systems for igniting fuel, such as solid fuels within a grill, furnace, fireplace, etc. More specifically, the disclosure relates to a contactless ignition system for the ignition of solid fuels.

### BACKGROUND

Many heating and cooking applications utilize solid fuel to provide heat through the process of combustion. Such heating and cooking applications may include stoves, grills, fireplaces, furnaces, or the like. Solid fuel in such heating and cooking applications may include wood pellets, charcoal, coal, etc. In operation, the solid fuel is ignited to combust to provide heat for cooking or to heat a surrounding space.

The solid fuel may be ignited by hand, such as by using matches, lighters, a chimney starter, etc. However, many heating and cooking applications use an electric igniter to light the solid fuel for the convenience of the user. Such electric igniters typically operate using a heating element. The heating element is placed next to the solid fuel, such as in a fuel pot or burn pot. Once the heating element is sufficiently hot, contact between the fuel and the heating element causes the fuel to combust, thereby igniting the fuel and providing the heat for cooking and/or heating.

### DISCLOSURE

According to one aspect of the present disclosure, a heating system includes a firepot configured to hold the fuel to be combusted therein. The heating system also includes a contactless ignition system including a heating element configured to generate heat sufficient to combust the fuel within the firepot, and an element housing interfaced with the firepot. The element housing is configured to at least partially surround the heating element to prevent the heating element from contacting the fuel within the firepot.

In one aspect, a grilling device includes an oven section. The grilling device also includes a support element supporting the oven section and a hopper for storing and delivering fuel. The grilling device includes a heating system that includes a firepot configured to hold the fuel delivered from the hopper and a contactless ignition system. The contactless ignition system includes a heating element and is configured to ignite the fuel held in the firepot and to prevent direct contact between the heating element and the fuel held in the firepot.

In one aspect, a contactless ignition system includes a heating element and an element housing. The element housing is configured to at least partially surround the heating element to prevent direct contact between the heating element and fuel to be ignited by the contactless ignition system.

### BRIEF DESCRIPTION OF THE DRAWINGS

For a detailed understanding of the disclosure, reference should be made to the following detailed description, taken in conjunction with the accompanying drawings, in which like elements have generally been designated with like numerals.
FIG. 1A illustrates an exemplary grilling device in a closed configuration.
FIG. 1B illustrates the grilling device of FIG. 1A in an open configuration.
FIG. 2A illustrates a side view of a heating system with a contactless ignition system in accordance with one embodiment.
FIG. 2B illustrates a top perspective view of the heating system with a contactless ignition system of FIG. 2A.
FIG. 2C illustrates a side section view of the heating system with a contactless ignition system of FIG. 2A.
FIG. 3A illustrates a side perspective view of a heating system with a contactless ignition system in accordance with one embodiment.
FIG. 3B illustrates a top perspective view of the heating system with a contactless ignition system of FIG. 3A.
FIG. 3C illustrates a side section view of the heating system with a contactless ignition system of FIG. 3A.
FIG. 4 illustrates a top perspective view of a heating system with a contactless ignition system.
FIG. 5 illustrates a perspective section view of a heating system with a contactless ignition system.

### MODE(S) FOR CARRYING OUT THE INVENTION

The illustrations presented herein are not actual views of any grilling device, heating system, ignition system, or any component thereof, but are merely idealized representations, which are employed to describe embodiments of the invention.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, any relational term, such as "first," "second," "top," "bottom," "upper," "lower," "above," "beneath," "side," "upward," "downward," etc., is used for clarity and convenience in understanding the disclosure and accompanying drawings, and does not connote or depend on any specific preference or order, except where the context clearly indicates otherwise. For example, these terms may refer to an orientation of elements of any grilling device, heating system, ignition system, or any component thereof, when utilized in a conventional manner. Furthermore, these terms may refer to an orientation of elements of any grilling device or ignition system as illustrated in the drawings.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

It will be appreciated that while reference is made to "grills," "grilling," "grilling devices," "grilling systems," and the like, the present disclosure extends to smoking, baking, roasting, braising, barbequing, and other food preparation methods, as well as devices and systems for warming, cooking, and/or preparing food products in any of the above-recited or other manners. Likewise, while reference is made to an "oven section," "cooking section," "heating area," and the like, the present disclosure also extends to various spaces suitable for heating, including open grilling surfaces (e.g., exposed to ambient air), closed kilns and ovens, heating spaces that can be selectively opened and closed, and the like. Accordingly, the particular features, configurations, design characteristics, and/or components (assemblies) described herein can be applicable to a variety of different fields of use extending beyond cooking or otherwise preparing food products, such as in heating applications through the use of fireplaces, stoves, furnaces, or the like. These different fields of use are also contemplated herein. Thus, reference to one or more "grills," "grilling," "grilling devices," "grilling systems," and the like, or one or more components thereof, should not be construed as being limited only to applications involving food grilling or grilling devices.

Grills of the present disclosure can be heated using a variety of solid fuels. For example, the disclosure extends to grills configured to burn solid fuel (e.g., charcoal, briquettes, wood, etc.). In some embodiments, the grill is configured to use wood pellets as fuel. In addition, in some embodiments, grills according to the present disclosure are configured to be moveable (e.g., by means of wheel(s) or other moving element). In other embodiments, grills may be configured as stationary appliances and/or may be installed in a relatively permanent fashion (e.g., bolted or otherwise fastened to a wall and/or floor, or otherwise installed as part of a kitchen or cooking area). Furthermore, grills according to the present disclosure can be configured for outdoor use in some embodiments. For instance, certain regulations and/or safety concerns may require and/or recommend the use of combustion-style grills only in outdoor, open-air areas, away from structures, vegetation, and/or other potentially flammable materials.

In addition, certain embodiments may be described with reference to one or more metals or metal materials. As used herein, the term "metal" refers to a material that comprises an elemental metal or metal alloy, blend, or combination. Certain embodiments may also refer to heat and/or heat distribution and/or circulation. It will be appreciated that such forms of directing and/or using heat can include active distribution and/or circulation and/or passive distribution and/or circulation.

It is further to be understood that some of the drawings included herewith, and which are referenced herein, are diagrammatic, schematic, and other representations of example embodiments, and are not limiting on the present disclosure. Moreover, while various drawings are provided at a scale that is considered functional for some embodiments, the drawings are not necessarily drawn to scale for all contemplated embodiments. No inference should therefore be drawn from the drawings as to the necessity of any scale. Rather, the proportionality, scale, size, shape, form, function, and/or other feature of the disclosed embodiments can be altered without necessarily departing from the scope of this disclosure (unless such feature is expressly described herein as essential).

Furthermore, as indicated above, in the exemplary embodiments illustrated in the figures, like structures will be provided with similar reference designations, where possible. Specific language will be used herein to describe the exemplary embodiments. Nevertheless, it will be understood that no limitation of the scope of the disclosure is thereby intended. Rather, it is to be understood that the language used to describe the exemplary embodiments is illustrative only and is not to be construed as limiting the scope of the disclosure (unless such language is expressly described herein as essential).

Alterations and further modifications of the features illustrated herein, and additional applications of the principles illustrated herein, which would occur to one skilled in the relevant art and having possession of this disclosure, are to be considered within the scope of this disclosure. Unless a feature is described as requiring another feature in combination therewith, any feature herein may be combined with another feature of a same or different embodiment disclosed herein. Furthermore, various well-known aspects of illustrative systems, methods, apparatus, and the like are not described herein in particular detail in order to avoid obscuring aspects of the example embodiments.

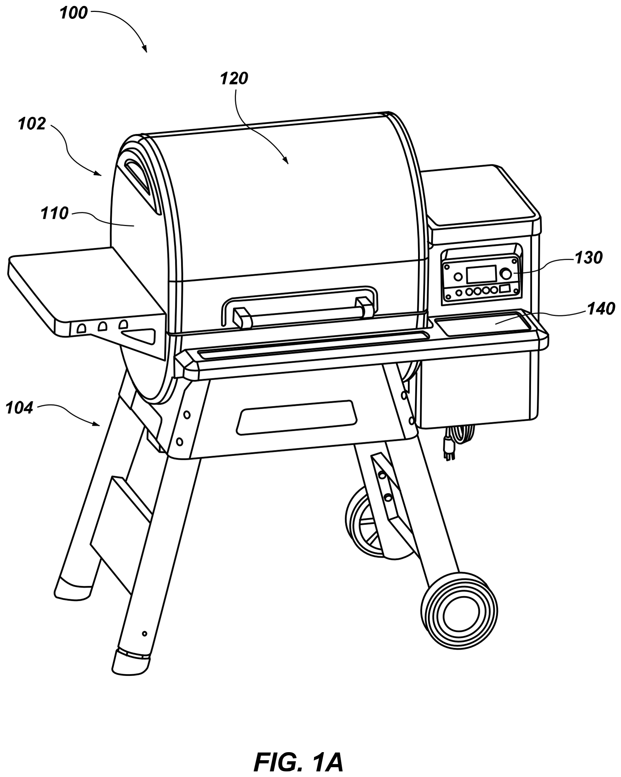

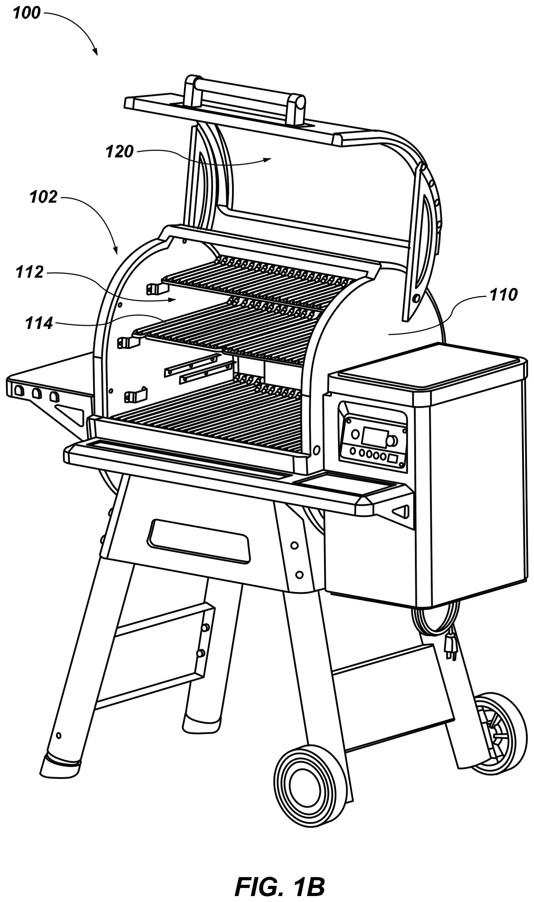

Reference will now be made to the figures to describe various aspects of example embodiments of the disclosure. FIGS. 1A and 1B depict an exemplary grilling device 100. Grilling device 100 may have an oven section 102, a support element 104 supporting oven section 102 above the ground, a hopper 130 for storing and delivering a fuel source (e.g., wood pellets) to oven section 102, and utility shelves 140. Oven section 102 comprises an outer wall 110 and/or a lid 120 that at least partially bound an internal grilling compartment 112. One or more grill racks 114 can be disposed within the internal grilling compartment 112 for receiving a food product to be prepared therein.

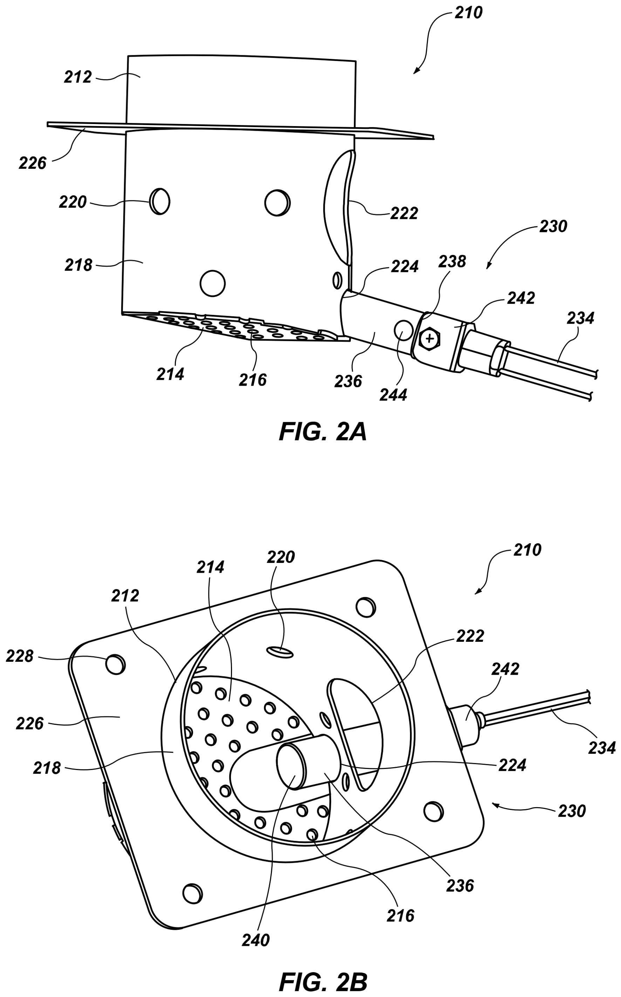

The oven section 102 may be heated by a heating system, such as a heating system 210 shown in FIGS. 2A-2C. The heating system 210 may be disposed within the oven section 102 of the grilling device 100. The heating system 210 may comprise a firepot 212. The firepot 212 is configured to hold fuel to be ignited and burned to heat the oven section 102 of the grilling device 100. The firepot 212 may comprise a base 214 with several base apertures 216 formed therein and a cylindrical wall 218 extending upwards from an outside edge of the base 214. The base apertures 216 are provided to facilitate airflow through the firepot 212 and to allow ash from expended fuel to drop out of firepot 212. The cylindrical wall 218 may comprise wall apertures 220 to further enhance airflow through the firepot 212. An auger opening 222 is also formed in the cylindrical wall 218 such that the firepot 212 may be connected to auger (not shown) which pushes fuel (e.g., wood pellets) into the firepot 212. The cylindrical wall 218 further comprises an igniter opening 224. The igniter opening 224 facilitates the fuel held in the firepot 212 to interface with a contactless ignition system 230 to ignite the fuel within the firepot 212. Though the firepot 212 is shown with the cylindrical wall 218, the firepot 212 could take on any number of other different shapes, and the cylindrical wall 218 shown is not intended to be limiting.

The firepot 212 may be mounted within the oven section 102 via a mounting flange 226. The mounting flange 226 may extend horizontally from the cylindrical wall 218. The mounting flange 226 may further include one or more mounting holes 228 to facilitate securing the firepot 212 within the oven section 102.

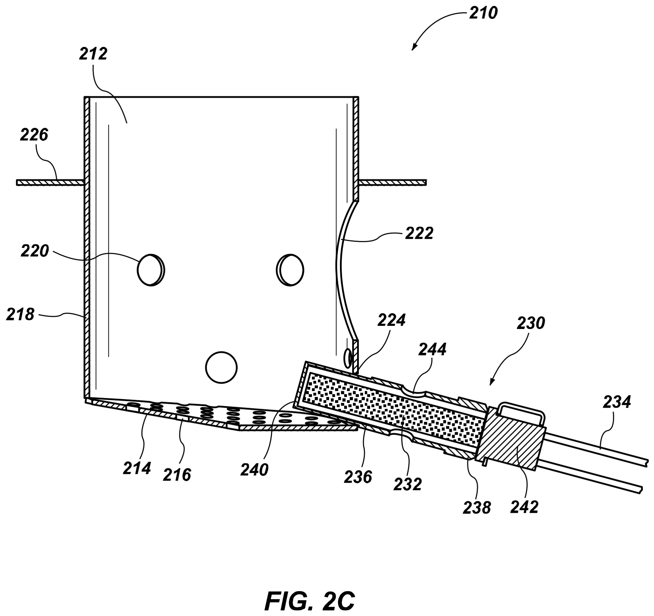

The heating system 210 includes an ignition system 230 configured to ignite the fuel held within the firepot 212. The ignition system 230 may comprise an igniter to cause the fuel to combust. The igniter may comprise a heating element 232 (see FIG. 2C). The heating element 232 may be any suitable heating element to provide sufficient heat to ignite the fuel (e.g., wood pellets) in the firepot 212. For example, the heating element 232 may be a silicon nitride heating element, a silicon carbide heating element, a stainless-steel cartridge heating element, an Inconel cartridge heating element, or the like. The heating element 232 may be connected to a power source that provides electrical power to the heating element 232 via a power supply line 234.

The ignition system 230 may be configured to be a contactless ignition system. By contactless ignition system it is meant that the heating element (e.g., heating element 232) is prevented from coming into direct contact with an ember bed--i.e., the fuel (e.g., wood pellets) and/or byproducts from the combustion of the fuel (e.g., ash)--within the firepot 212. It has been found that direct contact of a heating element with the fuel or with byproducts of combustion of the fuel may lead to degradation of the heating element or may otherwise result in a decreased reliability of the heating element. Such degradation may result in a decreased lifespan of or damage to the heating element. Furthermore, direct contact between the heating element and the ember bed may introduce safety concerns caused by electrical conductivity (e.g., the unintentional creation of electrical conductive paths) between the heating element and other components of the grilling device.

The ignition system 230 comprises an element housing 236 that is configured to at least partially surround the heating element 232 to prevent the heating element 232 from contacting the ember bed in the firepot 212. For example, the element housing 236 may be configured to enclose the heating element 232 at least along a portion of the heating element that extends into the firepot 212. For example, the element housing 236 completely isolates the heating element 232 from the ember bed within the firepot 212 by having no apertures at least from a point along the element housing 236 that interfaces with the cylindrical wall 218 of the firepot 212 to a distal end 240 of the element housing 236. Thus, the element housing 236 may be termed have a closed distal end 240 where there are no apertures in the element housing 236 on the portion of the element housing 236 within the firepot 212.

The element housing 236 may be formed from any suitable material that is compatible with high temperature operating conditions and that adequately transfers heat from the heating element to the fuel (e.g., wood pellets) in the firepot 212. Such materials may include, but are not limited to, steel, stainless steel and other steel alloys, ceramic materials, and other high temperature compatible materials including Inconel, titanium, tungsten, and alloys thereof.

The element housing 236 may be configured to extend at least partially through the igniter opening 224 of the firepot 212 such that the distal end 240 of the element housing 236 is disposed within the firepot 212 near the base 214 thereof. A proximal end 238 of the element housing 236 may be positioned outside the firepot 212 and may abut against a connector 242 of the heating element 232. In this example, the element housing 236 is formed in a cylindrical shape and is dimensioned to provide a clearance between the heating element 232 and an inner surface of the element housing 236. For example, the clearance between the heating element 232 and the element housing 236 may have a dimension from 1mm to 20mm. The clearance dimension may further be from 2mm to 15mm. The clearance between the heating element 232 and the element housing 236 is configured to prevent electrical conductivity therebetween. Other shapes for the element housing 236 may also be used in addition to a cylindrical shape. For example, the element housing 236 may be rectangular in cross-section, may be a hexagon in cross-section, or the like.

In some embodiments, the element housing 236 may comprise vent holes 244 to facilitate circulation within the element housing 236, and for temperature control within the element housing 236. The vent holes 244 may be disposed near the proximal end 238 such that they are positioned outside the firepot 212 when the ignition system 230 is installed onto the firepot 212.

The ignition system 230 may ignite the fuel in the firepot 212 via direct contact between the element housing 236 and the fuel (e.g., wood pellets) within the firepot 212. For example, the heating element 232 may be controlled to be activated to provide heat which is transferred to the element housing 236 to heat the element housing 236. When fuel is added to the firepot 212, the element housing 236 is in direct contact with at least some of the fuel in the firepot 212. When the element housing 236 is sufficiently heated by the heating element 232, the element housing 236 causes the fuel to ignite. Meanwhile, the element housing 236 isolates and protects the heating element 232 from direct contact with the ember bed, increasing electrical safety and igniter reliability of the ignition system 230.

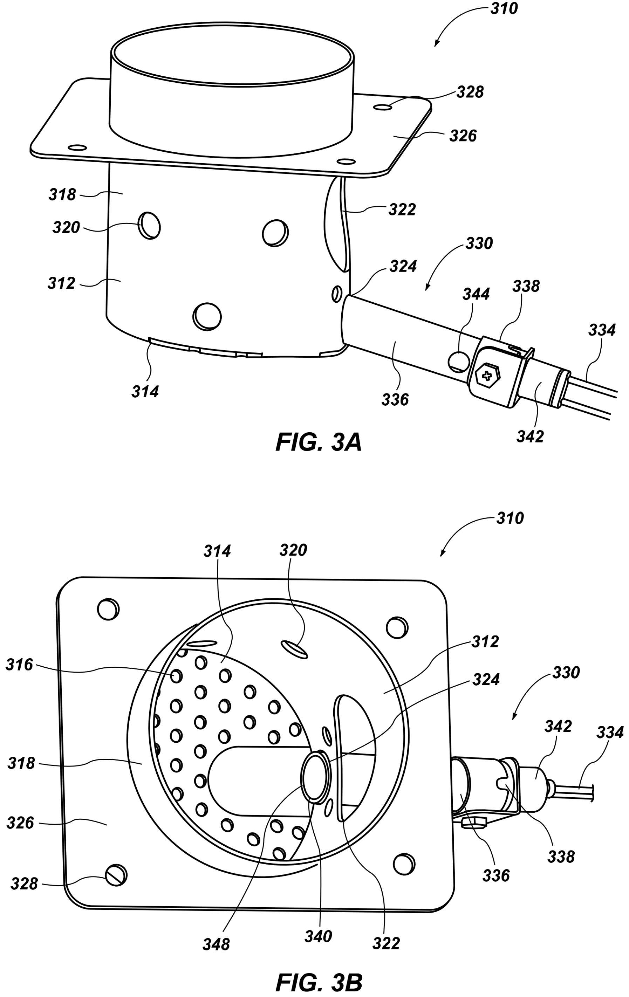

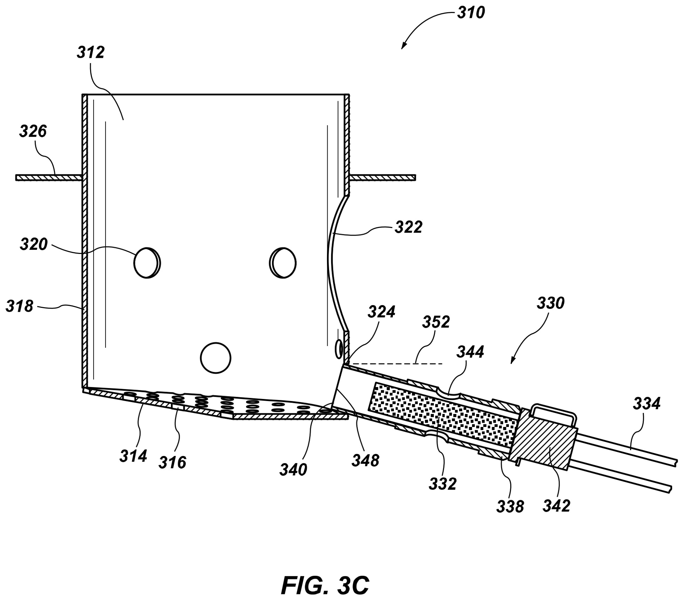

FIGS. 3A-3C show views of a contactless ignition system 330 of a heating system 310 according to embodiments of the present disclosure. To avoid repetition, not all features (e.g., structures, parts, systems) shown in FIGS. 3A-3C are described in detail herein. Rather, unless described otherwise below, in FIGS. 3A-3C, a feature designated by a reference numeral that is a 100 increment of the reference numeral of a feature previously described with reference to FIGS. 2A-2C will be understood to be substantially similar to the previously described feature. By way of non-limiting example, unless described otherwise below, features designated by the reference numerals 312, 324 in FIGS. 3A-3C respectively will be understood to be substantially similar to the firepot 212 and igniter opening 224 previously described herein with reference to FIGS. 2A-2C.

In FIGS. 3A-3C, the ignition system 330 may comprise an element housing 336 to protect and isolate a heating element 332, similar to the element housing 236 described above. However, unlike the closed distal end 240 of the element housing 236 in FIGS. 2A-2C, the distal end 340 of the element housing 336 may be configured to be open-ended (i.e., to have one or more openings in the element housing 336 at or within the firepot 312). In this embodiment, the 336 may comprise a distal end opening 348 at the distal end 340 of the element housing 336. The distal end opening 348 may be configured to allow hot air to escape from the element housing 336 to aid in the ignition of the fuel in the firepot 312.

The element housing 336 may be positioned relative to the firepot 312 such that the distal end 340 is about in alignment with the cylindrical wall 318 of the firepot 312. In other words, the element housing 236 may be positioned so as not to protrude into the firepot 312. In some examples, the element housing 336 may be oriented at a nonzero angle relative to a plane 352 that is perpendicular to the cylindrical wall 318 of the firepot 312. For example, the angle between the plane 352 and a longitudinal axis of the element housing 336 may be from greater than 0° to 15°. In some instances, the angle may be as much as 45°. The angle of the element housing 336 relative to the plane 352 may help facilitate hot air being released from the distal end 340 of the element housing 336 via convection to aid in ignition of the fuel in the firepot 312.

The heating element 332 may be positioned relative to the distal end 340 of the element housing 336 such that the heating element 332 is prevented from contacting the ember bed in the firepot 312. For example, the heating element 332 may be positioned relative to the distal end 340 of the element housing 336 such that the heating element 332 is inset by at least 10mm from the distal end 340 of the element housing 336.

The ignition system 330 is configured to ignite fuel within the firepot 312 via hot air entering the firepot 312 from the distal end opening 348 of the element housing 336. The heating element 332 is activated to generate heat which heats the air inside the element housing 336. The hot air escapes from the element housing 336 via the distal end opening 348 and ignites the fuel within the firepot 312. The hot air escaping from the distal end opening 348 of the element housing 336 may be facilitated by the angular orientation of the element housing 336 relative to a plane 352 perpendicular to the cylindrical wall 318 of the firepot 312. In some embodiments, a grilling device (e.g., grilling device 100) may comprise an air circulation system which may force air through the grilling device (e.g., through oven section 102) and through the ignition system 330 and firepot 312 of the heating system 310, thereby aiding in the transfer of hot air from the heating element 332 to the fuel in the firepot 312. The vent holes 344 of the element housing 336 may aid in circulation of the hot air from within the element housing 336 through the distal end opening 348 to the fuel in the firepot 312.

The element housing 336 with the distal end opening 348 may provide for reduced operating temperatures in the material of the element housing 336 as compared with the element housing 236 having the enclosed distal end 240 because heat generated by the heating element 332 is able to escape from the distal end opening 348. This may allow materials to be selected for the element housing 336 that are relatively less sensitive to high temperatures as compared with the materials selected for the element housing 236, which may help to decrease costs of the contactless ignition system 330.

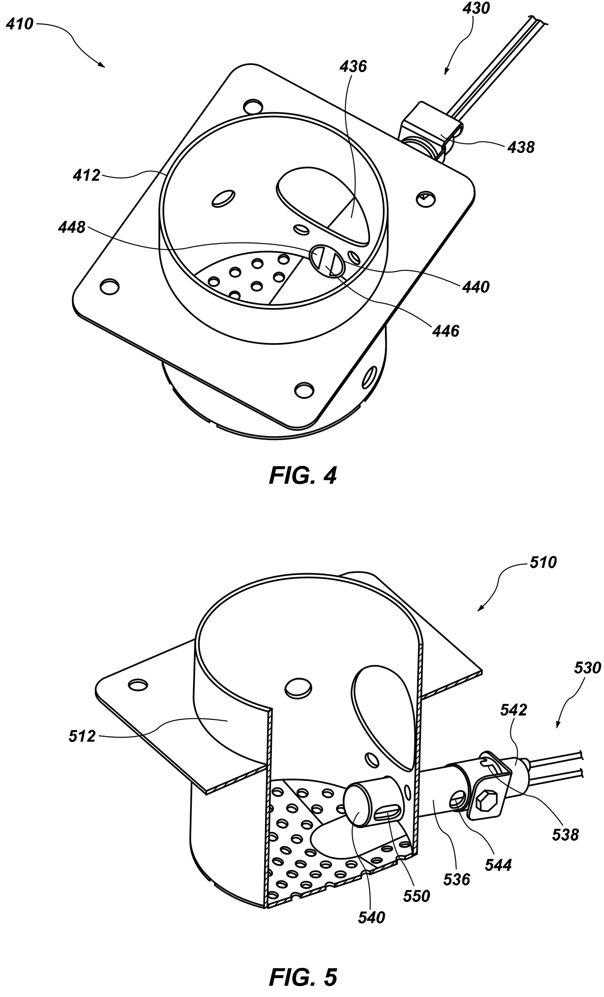

Other variations of an open-ended contactless igniter are possible. FIG. 4 shows an example of an open-ended igniter as part of an ignition system 430 of a heating system 410. To avoid repetition, not all features (e.g., structures, parts, systems) shown in FIG. 4 are described in detail herein. Rather, unless described otherwise below, in FIG. 4, a feature designated by a reference numeral that is a 100 increment of the reference numeral of a feature previously described with reference to FIGS. 3A-3C will be understood to be substantially similar to the previously described feature. By way of a non-limiting example, unless described otherwise below, the feature designated by the reference numeral 412 in FIG. 4 will be understood to be substantially similar to the firepot 312 previously described herein with reference to FIGS. 3A-3C.

As shown in FIG. 4, the element housing 436 may be configured to include a distal bridge 446 at the distal end 440 thereof. The distal bridge 446 is configured to cover a part of the distal end 440 of the element housing 436, creating a plurality of distal end openings 448 around the distal bridge 446. The distal bridge 446 may prevent fuel or byproducts of combustion from falling into the distal end 440 of the element housing 436 and coming into contact with a heating element (not shown in FIG. 4, but similar to heating elements 332, 232 described above). The distal end openings 448 may facilitate hot air to flow out of the element housing 436 to ignite fuel in the firepot 412, similar to the operation of the element housing 336.

The distal bridge 446 is shown as a single, straight member extending across the distal end 440 of the element housing 436 in FIG. 4. However, other configurations are also possible. For example, the distal bridge 446 may comprise a cross-shape, may comprise "spokes," such as having three or more spokes, may be in the form of a screen attached to the distal end 440 of the element housing 436, or the like.

FIG. 5 shows an example of an open-ended igniter as part of a contactless ignition system 530 of a heating system 510. To avoid repetition, not all features (e.g., structures, parts, systems) shown in FIG. 5 are described in detail herein. Rather, unless described otherwise below, in FIG. 5, a feature designated by a reference numeral that is a 100 increment of the reference numeral of a feature previously described with reference to FIG. 4 will be understood to be substantially similar to the previously described feature. By way of a non-limiting example, unless described otherwise below, the feature designated by the reference numerals 512 in FIG. 5 will be understood to be substantially similar to the firepot 412 previously described herein with reference to FIG. 4.

In FIG. 5, the element housing 536 may be configured with one or more distal side holes 550 disposed on the element housing 536 adjacent to or near a distal end 540 of the element housing 536. The placement of the distal side holes 550 on a side surface of the element housing 536 may help prevent fuel or byproducts of combustion from falling into the distal end 540 of the element housing 536 and coming into contact with a heating element (not shown in FIG. 5, but similar to heating elements 332, 232 described above). The distal side holes 550 may facilitate hot air from flowing out of the element housing 536 to ignite fuel in the firepot 512.

The element housing 536 may be positioned relative to the firepot 512 such that it protrudes into the firepot 512 such that the distal side holes 550 are disposed within the firepot 512. This allows the hot air from the element housing 536 to be transported to the fuel within the firepot 512. Furthermore, the distal end 540 of the element housing 536 may further aid in combustion of the fuel in the firepot 512 via direct contact of the element housing 536 with the fuel.

While the contactless ignition systems (e.g., ignition systems 230, 330, 430, 530) described herein are described in context with a grilling device 100, it will be appreciated that such ignition systems may be used in other devices. For example, the ignitions systems may be used with a pellet fed fireplace, a furnace, stove, and other heating and cooking applications.

The embodiments of the disclosure described above and illustrated in the accompanying drawings do not limit the scope of the disclosure, which is encompassed by the scope of the appended claims and their legal equivalents. Any equivalent embodiments are within the scope of this disclosure. Indeed, various modifications of the disclosure, in addition to those shown and described herein, such as alternate useful combinations of the elements described, will become apparent to those skilled in the art from the description. Such modifications and embodiments also fall within the scope of the appended claims and equivalents.

## Claims

1. A heating system comprising:
a firepot (212, 312, 412, 512) configured to hold fuel to be combusted therein; and
a contactless ignition system (230, 330, 430, 530) comprising:
a heating element (232, 332) configured to generate heat sufficient to combust the fuel within the firepot (212, 312, 412, 512); and
an element housing (236, 336, 436, 536) interfaced with the firepot (212, 312, 412, 512) and configured to at least partially surround the heating element (232, 332) to prevent the heating element (232, 332) from contacting the fuel within the firepot (212, 312, 412, 512).

2. The heating system of claim 1, wherein the firepot (212, 312, 412, 512) comprises a wall (218, 318) and the element housing (236, 336, 436, 536) interfaces with an igniter opening (224, 324) in the wall (218, 318).

3. The heating system of claim 2, wherein the element housing (236, 336, 436, 536) protrudes through the igniter opening (224, 324) such that a distal end (240, 340, 440, 540) of the element housing (236, 336, 436, 536) is within the firepot (212, 312, 412, 512).

4. The heating system of claim 3, wherein the element housing (236, 336, 436, 536) completely isolates the heating element (232, 332) from the firepot (212, 312, 412, 512).

5. The heating system of claim 4, wherein the element housing (236, 336, 436, 536) comprises vent holes (244, 344) disposed outside the firepot (212, 312, 412, 512).

6. The heating system of claim 3, wherein the element housing (236, 336, 436, 536) comprises at least one distal side hole (550) disposed in a side wall of the element housing adjacent to or near the distal end (240, 340, 440, 540) of the element housing (236, 336, 436, 536).

7. The heating system of claim 2, wherein the element housing (236, 336, 436, 536) is oriented at a nonzero angle relative to a plane (352) that is perpendicular to the wall (218, 318) of the firepot (212, 312, 412, 512).

8. The heating system of claim 2, wherein a distal end (240, 340, 440, 540) of the element housing (236, 336, 436, 536) is about aligned with the wall (218, 318) of the firepot (212, 312, 412, 512).

9. The heating system of claim 8, wherein the element housing (236, 336, 436, 536) comprises a distal end opening (348, 448) allowing heated air from within the element housing (236, 336, 436, 536) to move into the firepot (212, 312, 412, 512).

10. The heating system of claim 9, wherein the element housing (236, 336, 436, 536) comprises a distal bridge (446) on the distal end (240, 340, 440, 540) of the element housing (236, 336, 436, 536) preventing contact between the element housing (236, 336, 436, 536) and the fuel in the firepot (212, 312, 412, 512).

11. The heating system of claim 1, wherein a clearance between the heating element (232, 332) and an inner surface of the element housing (236, 336, 436, 536) is at least 2mm.

12. The heating system of claim 1, wherein the heating element (232, 332) is inset from a distal end (240, 340, 440, 540) of the element housing (236, 336, 436, 536), in particular by at least 10mm.

13. A grilling device comprising:
an oven section (102);
a support element supporting the oven section (104);
a hopper (130) for storing and delivering fuel; and
a heating system (210, 310, 410, 510) comprising:
a firepot (212, 312, 412, 512) configured to hold the fuel delivered from the hopper (130); and
a contactless ignition system comprising a heating element, the contactless ignition system being configured to ignite the fuel held in the firepot and to prevent direct contact between the heating element and the fuel held in the firepot.

14. The grilling device of claim 13, wherein the heating system is according to one of claims 1 to 12.

15. A contactless ignition system (212, 312, 412, 512) comprising:
a heating element (210, 310, 410, 510); and
an element housing (236, 336, 436, 536) configured to at least partially surround the heating element (232, 332) to prevent direct contact between the heating element (232, 332) and fuel to be ignited by the contactless ignition system (230, 330, 430, 530).
